# EUROPÄISCHE PATENTANMELDUNG

(11) **EP 0 844 221 A1**
(43) Veröffentlichungstag der Anmeldung: **27.05.1998**
(21) Anmeldenummer: 97120276.7
(22) Anmeldetag: 19.11.1997
(51) Int. Cl.: C04B 38/00, C04B 26/02

(54) **Offenzellige poröse Sinterprodukte und Verfahren zu ihrer Herstellung**

(30) Priorität: 21.11.1996 DE 19648270
(71) Anmelder: BASF AKTIENGESELLSCHAFT, 67056 Ludwigshafen (DE)
(72) Erfinder: Josef-Sterzel, Hans, Dr., 67125 Dannstadt-Schauernheim (DE)
(74) Vertreter: Isenbruck, Günter, Dr.

(57) **Zusammenfassung**

Das Verfahren zur Herstellung von offenzelligen, porösen, anorganischen Sinterprodukten beinhaltet die Schritte
a) Eintragen eines fließfähigen Gemisches, enthaltend wäßrige Polymerisatdispersion, sinterfähiges anorganisches Pulver und Dispergiermittel, in ein Fällbad, in dem das Polymerisat ausfällt oder koaguliert, zur Bildung eines nicht fließfähigen Produktes, das Polymerisat, anorganisches Pulver und Dispergiermittel enthält,
b) Abtrennen des Produktes aus dem Fällbad und Trocknen des Produktes
c) Erhitzen des Produktes zur Entfernung von Polymerisat und Dispergiermittel und Sintern des Produktes.

Die porösen offenzelligen Sinterprodukte aus gesintertem anorganischem Pulver haben ein Porenvolumen von 50 bis 95 %, eine Oberfläche von 0,1 bis 50 m²/g und eine mindestens bimodale Porengrößenverteilung mit Maxima im Bereich von 0,02 bis 5 µm und 20 bis 500 µm.

## Beschreibung

Die Erfindung betrifft offenzellige poröse Sinterprodukte aus keramischen oder metallischen Materialien, Verfahren Zu ihrer Herstellung und deren Verwendung.

Verfahren Zur Herstellung offenzelliger poröser Granulate durch Brechen anorganischer Schäume sind bekannt.

Diese Verfahren weisen jedoch schwerwiegende Nachteile und hohe Kosten auf, so daß sie bislang nur in Spezialfällen genutzt wurden. Das am weitesten verbreitete Verfahren besteht darin, daß offenzellige Polymerschäume mit einem Schlickermaterial infiltriert werden, das anorganische Partikel enthält. Der infiltrierte Polymerschaum, meist ein Polyurethanschaum, wird dabei vorsichtig getrocknet, und durch langsames, kontrolliertes Erhitzen werden die organischen Bestandteile entfernt und das aus anorganischem Pulver bestehende Negativ gesintert. Sowohl die Trocknung des mit Schlickermaterial ausgefüllten Porengefüges, wie auch das Pyrolysieren der organischen Bestandteile ist sehr zeit- und kostenaufwendig. Zusätzlich sind die Materialdicken aufgrund der langsamen Trocknung und Pyrolyse auf wenige Zentimeter beschränkt. Die Herstellung derartiger Schäume ist beispielsweise in DE-A-39 34 496 und EP-A-0 157 974 beschrieben. In der EP-A-0 440 322 ist eine Technologie beschrieben, bei der offenzellige keramische Schäume über eine Anordnung von Walzen Zum Infiltrieren und Komprimieren von infiltrierten Polymerschäumen hergestellt werden. So hergestellte anorganische Schäume werden beispielsweise als Träger für Katalysatoren, z.B. für die Rauchgasbehandlung, als Fahrzeugabgaskatalysator oder Dieselabgasfilter, wie auch als Filter Zur Reinigung heißer Schmelzen wie Metallschmelzen oder zur Filtration heißer Gase verwendet. Als Materialien kommen beispielsweise Lithiumaluminiumsilicat oder Cordierit, alpha-Aluminiumoxid, Siliciumcarbid oder SiO₂ zur Anwendung. Auch Siliciummitrid und Zirkonoxid/Aluminiumoxid-Mischkeramiken wurden verwendet.

In der WO 95/11752 ist ein Verfahren beschrieben, bei dem Metalle chemisch auf einem offenzelligen Polymerschaum abgeschieden werden und nach Trocknen und Pyrolysieren ein offenzelliger Metallschaum erhalten wird, der durch Oxidation in einen keramischen Schaum überführt werden kann. Auch hierbei sind das Trocknen und Pyrolysieren sehr aufwendig.

In der EP-A-0 344 284 ist die Herstellung anorganischer Schäume durch Mischen stark alkalischer Alkalimetallsilicate oder Alkallmetallaluminate mit einem Pulver eines unedlen Metalls, vorzugsweise Aluminium beschrieben, wobei sich das Metall löst und Wasserstoff als Treibgas entwickelt wird. Nach dem Trocknen der Schäume werden diese mit Ammoniumverbindungen behandelt, um nachteilig wirkende Alkalimetallionen zu entfernen.

In der EP-A 0 330 963 ist ein Verfahren Zur Herstellung keramischer Schäume beschrieben, bei dem man wäßrige keramische Schlickermaterialien mit wäßrigen Polymerdispersionen versetzt, die Mischung zu einem Schaum schlägt, der das 1,5 - 10fache des Anfangsvolumens einnimmt, den Schaum in eine Form einlaufen läßt, trocknet, die organischen Hilfsstoffe herauspyrolisiert und sodann sintert. Durch die Verfahrensweise werden auch größere Luftblasen eingeschlagen. Zudem ist ein großer Teil der Schaumzellen geschlossen.

Aufgabe der vorliegenden Erfindung ist die Bereitstellung eines Verfahrens Zur Herstellung offenzelliger poröser anorganischer Sinterprodukte, das kostengünstig durchgeführt werden kann und die Nachteile der bestehenden Verfahren vermeidet. Die so hergestellten Sinterprodukte sollen vorzugsweise mindestens bimodale Porengrößenverteilungen und zusammenhängende Kanäle aufweisen, die das Produkt durchziehen.

Die Aufgabe wird erfindungsgemäß gelöst durch ein Verfahren Zur Herstellung von offenzelligen, porösen, anorganischen Sinterprodukten durch
a) Eintragen eines fließfähigen Gemisches, enthaltend wäßrige Polymerisatdispersion, sinterfähiges anorganisches Pulver und Dispergiermittel, in ein Fällbad, in dem das Polymerisat ausfällt oder koaguliert, Zur Bildung eines nicht fließfähigen Produktes, das Polymerisat, anorganisches Pulver und Dispergiermittel enthält,
b) Abtrernen des Produktes aus dem Fällbad und Trocknen des Produktes,
c) Erhitzen des Produktes Zur Entfernung von Polymerisat und Dispergiermittel und Sintern des Produktes.

Die nach diesem Verfahren hergestellten Sinterprodukte bzw. Granulate sind offenzellig, weisen eine vorzugsweise bimodale Zellengrößenteilung mit engen Maxima und einen Porenvolumenanteil von 50 - 95 % auf. Sie zeigen eine hohe mechanische Stabilität und sind bereits vor dem Sintern im grünen Zustand offen porös, wodurch ein langwieriges Pyrolysieren der organischen Hilfsstoffe vermieden werden kann. Das erfindungsgemäße Verfahren ermöglicht somit die schnelle und kostengünstige Herstellung von offenzelligen porösen Sinterprodukten.

Im erfindungsgemäßen Verfahren wird zunächst ein fließfähiges Gemisch hergestellt, das eine wäßrige Polymerisatdispersion, sinterfähiges anorganisches Pulver und Dispergiermittel enthält.

Als Polymerisatdispersion kann jede geeignete Dispersion verwendet werden, die beim Eintragen in das nachstehend beschriebene Fällbad zu einem Ausfällen oder einer Koagulation des Polymerisats führt.

Als Polymerisatdispersion kann jedes durch radikalische Polymerisation erhältliche Polymerisat eingesetzt werden. Im allgemeinen wird es sich um ein durch Emulsionspolymerisation erhaltenes Polymerisat handeln. In gleicher Weise können jedoch auch Polymerisate eingesetzt werden, welche durch eine andere Polymerisationsart, beispielsweise durch Suspensionspolymerisation, erhältlich sind. Vorzugsweise wird das Polymerisat in Form einer Dispersion eingesetzt, die insbesondere einen Polymerisatgehalt im Bereich von 40 bis 80 Gew.-%, speziell 50 bis 75 Gew.-% aufweist. Es kann sich dabei um eine Primärdispersion handeln, d.h. um eine Dispersion, so wie sie bei der Emulsionspolymerisation anfällt, oder um eine Sekundärdispersion, d.h. um eine Dispersion, die durch nachträgliches Dispergieren eines bereits isolierten Polymerisates im Dispersionsmedium erhalten worden ist.

Beim Dispersionsmedium handelt es sich in der Regel um Wasser. Es können jedoch auch mit Wasser mischbare organische Lösungsmittel, wie Alkohole und Ketone, beispielsweise Methanol, Ethanol, n-Propanol, Isopropanol, n-Butanol, Aceton oder Methylethylketon enthalten sein. Bevorzugt werden die Polymerisate durch radikalische Polymerisation von α,β-ethylenisch ungesättigten Monomeren hergestellt.

### Geeignete Monomere sind z.B.:

α,β-ethylenisch ungesättigte Mono- und Dicarbonsäuren, insbesondere solche mit 3 bis 6 Kohlerstoffatomen; vinylaromatische Verbindungen wie Styrol, α-Methylstyrol und Vinyltoluole; lineare 1-Olefine, verzweigtkettige 1-Olefine oder cyclische Olefine; Butadien; Vinyl- und Allylalkylether mit 1 bis 40 Kohlenstoffatomen im Alkylrest, wobei der Alkylrest noch weitere Substituenten wie eine Hydroxylgruppe, eine Amino- oder Dialkylaminogruppe oder eine bzw. mehrere Alkoxylatgruppen tragen kann; Acrylamide und alkylsubstituierte Acrylamide; sulfogruppenhaltige Monomere; C₁- bis C₈-Alkylester oder C₁-bis C₄-Hydroxyalkylester von C₃- bis C₆-Mono- oder Dicarbonsäuren (siehe oben), insbesondere der Acrylsäure, Methacrylsäure oder Maleinsäure; Alkylaminoalkyl(meth)acrylate oder Alkylaminoalkyl(meth)acrylamide.

Bevorzugte Monomere sind die erwähnten Ester der Acrylsäure und Methacrylsäure, die vinylaromatischen Verbindungen, Butadien, Vinylester, (Meth)acrylnitril und die erwähnten (Meth)acrylamide. Insbesondere sind auf Styrol/Butadien-Copolymerisaten und Acrylaten basierende Polymerisate bevorzugt. Das Polymerisat kann auch ein Kautschuk sein.

Bei Anwendung der wäßrigen Emulsionspolymerisation erhält man Polymerisate mit einem gewichsmittleren Molekulargewicht von 1000 bis 2 000 000, vorzugsweise 5000 bis 500 000. Die K-Werte liegen im allgemeinen im Bereich von 15 bis 150 (1 gew.-%ig in Dimethylformamid). Die mittlere Teilchengröße (bestimmt mittels Lichtstreuung (Autosizer)) liegt im Bereich von 20 bis 1000 nm, bevorzugt 30 bis 700 nm, besonders bevorzugt 40 bis 400 nm. Die Dispersion kann eine monomodale oder polymodale Teilchengrößenverteilung aufweisen.

Das Polymerisat dient auch als Bindemittel Zur mechanischen Verfestigung des ausgefüllten oder koagulierten Produktes.

Die Konzentration des Polymerisats in der Dispersion beträgt vorzugsweise 1 - 80, besonders bevorzugt 20 - 75 Gew.-%, bezogen auf die Dispersion. Bezogen auf das fließfähige Gemisch beträgt die Konzentration vorzugsweise 1 - 50, besonders bevorzugt 2 - 30, insbesondere 4 - 20 Gew.-%.

Als wäßriges Medium des Gemisches bzw. der Dispersion kann jedes geeignete wasserhaltige Medium verwendet werden. Beispielsweise kann in Wasser als Medium gearbeitet werden. Darüber hinaus kann ein Gemisch von Wasser mit einem wasserlöslichen organischen Hilfsmittel, wie einem niederen Alkohol, wie Ethanol oder Isopropanol, eingesetzt werden. Bei der Verwendung von Wasser als einzigem Medium Zur Herstellung des fließfähigen Gemisches kann auf ein Aufarbeiten organischer Lösungsmittel verzichtet werden. Zudem verläuft in einem wäßrigen Medium das Ausfällen bzw. Koagulieren der Polymerisatdispersion sehr schnell, beispielsweise im Vergleich zum Ausfällen von wasserlöslichen Polymeren in einem organischen Lösungsmittel. Es wird somit vorzugsweise in Wasser gearbeitet. Die wäßrige Polymerisatdispersion bewirkt durch das Ausfällen oder Koagulieren den Phasenwechsel von fließfähigem Gemisch zu einem nicht fließfähigen Produkt, das Polymerisat, anorganisches Pulver und Dispergiermittel enthält.

Als sinterfähiges anorganisches Pulver zum Aufbau des offenzelligen, porösen anorganischen Sinterproduktes, insbesondere zum Aufbau von Stegstrukturen darin, sind besonders geeignete anorganische Pulvermaterialien Metallpulver, insbesondere gegen verdünnte Säure stabile Metallpulver, mineralische Pulver, Keramikpulver, Metallcarbidpulver und Metallnitridpulver.

Es können beispielsweise keramische Materialien verwendet werden. Bevorzugt ist die Gruppe aus Aluminiumoxid, Zirkonoxid, das mit Magnesiumoxid oder Yttriumoxid teilweise oder ganz stabilisiert ist, Steatit, Cordierit, Zirkonsilikat, Siliciumcarbid, Siliciumnitrid, einschließlich bekannter Sinterhilfsmittel, wie Aluminiumoxid und Yttriumoxid, Cordierit, Mullit, Wolframcarbid, Titancarbid, Tantalcarbid, Vanadiumcarbid, Titannitrid, Tantalnitrid. Metallpulver können ebenfalls verwendet werden. Sie sind vorzugsweise ausgewählt aus Kupfer, Silber, Titan, Stahl und auf Eisen, Nickel oder Kobalt basierenden Legierungen. Es können auch Gemische der Pulver verwendet werden, beispielsweise Keramikpulver mit Gehalten anderer Materialien, beispielsweise Metallen. Die Gemische können auch auf die Gruppen der keramischen Pulver und Metallpulver beschränkt sein. Carbide, Nitride oder Metallpulver können ebenfalls untereinander und miteinander gemischt sein.

Die mittleren Korngrößen der bevorzugt eingesetzten keramischen Pulver betragen vorzugsweise 0,1 - 10 µm, besonders bevorzugt 0,3 - 2 µm. Die Korngrößen der Metallpulver betragen vorZugsweise 1 - 50 µm, besonders bevorzugt 2 - 20 µm.

Die Menge an anorganischem Pulver beträgt, bezogen auf das fließfähige Gemisch, vorzugsweise 10 - 95, besonders bevorzugt 25 - 85, insbesondere 40 - 85 Gew.-%.

Als Dispergiermittel kann jedes geeignete Dispergiermittel verwendet werden. Beispielsweise können ionische oder sterische Dispergiermittel eingesetzt werden. Geeignete ionische Dispergiermittel sind Ammoniak, Annnoniumsalze einer organischen oder anorganischen Säure, sowie Tetraalkylammoniumsalze von Fettsäuren. Ammoniumsalze von organischen oder anorganischen Säuren sind vorzugsweise niedermolekulare Verbindungen, beispielsweise Tetraalkylammoniumsalze von Fettsäuren mit vorzugsweise C₈₋₂₀-Alkylresten. Besonders bevorzugt sind Tetramethylammoniumsalze, Tetraethylammoniumsalze, Tetrapropylammoniumsalze und Tetrabutylammoniumsalze sowie die gemischten Salze. Als Fettsäuren werden dabei beliebige geeignete Fettsäuren verwendet, beispielsweise Ölsäure, Linolsäure, Linolensäure, Ricinussäure, Laurinsäure, Myristinsäure, Palmitinsäure oder Stearinsäure. Die sterisch wirkenden Dispergatoren weisen eine Tensidstruktur auf. Die Dispergiermittel erniedrigen die Viskosität des fließfähigen Gemisches und ermöglichen so einen vorteilhaft hohen Füllgrad, bei dem das Gemisch immer noch fließfähig bleibt. Zur Dispergierung keramischer Pulver werden vorzugsweise 0,5 - 3 Gew.-%, bezogen auf das keramische Pulver, verwendet. Zur Dispergierung der Metallpulver werden vorzugsweise 0,01 - 0,5 Gew.-%, bezogen auf das Gewicht des Metallpulvers, verwendet.

Die erfindungsgemäß eingesetzten Gemische können aus den vorstehend genannten Komponenten wäßrige Polymerisatdispersion, sinterfähiges anorganisches Pulver und Dispergiermittel bestehen. Sie können jedoch auch weitere Bestandteile, vorzugsweise in geringen Mengen, enthalten, beispielsweise Metall- oder Edelmetallionen oder diese Metalle. Geeignet sind beispielsweise Ionen der Elemente Al, B, Ge, der Gruppen IIIa, IIb, IVb, Vb, VIb des Periodensystems der Elemente, Be, Sn, Pb, Bi, Cu, Fe, Co, Ni, Ce, Mn oder deren Gemische. Ferner können Pigmente oder andere Stoffe, die im Sinterprodukt enthalten sein sollen, in das Gemisch eingebracht werden.

Die erfindungsgemäß eingesetzten fließfähigen Gemische enthalten vorzugsweise 10 - 80, besonders bevorzugt 20 - 50 Volumenteile anorganisches Pulver incl. Sinterhilfsmittel, vorzugsweise 15 - 70, besonders bevorzugt 30 - 60 Volumenteile Wasser, vorzugsweise 3 - 10, besonders bevorzugt 3 - 7 Volumenteile Dispergiermittel und vorzugsweise 3 - 40, besonders bevorzugt 5 - 30 Volumenteile Polymerisat. Die Volumenteile können Vol-% sein, wobei sich die Gesamtmenge auf 100 Vol-% ergänzt.

Die Herstellung der eingesetzten fließfähigen Gemische kann nach konventionellen Verfahren erfolgen. Beispielsweise kann die Herstellung in konventionellen Mischern durchgeführt werden. Das Einstellen der geeigneten Viskosität erfolgt dabei beispielsweise nach Augenschein. Es werden dabei Polymerisatdispersion, sinterfähiges anorganisches Pulver, Dispergiermittel und Wasser in solchen Verhältnissen gemischt, daß die Zubereitung unter ihrem eigenen Gewicht noch fließfähig ist bzw. Zu Strängen gepreßt werden kann. Je nach der Pulverkorngröße bzw. der Pulveroberfläche ist der Volumenfüllgrad, bei dem die Fließgrenze erreicht wird, verschieden. Beispielsweise wird bei den verhältnismäßig geringen Korngrößen keramischer Pulver von 0,3 - 2 µm die Fließgrenze bei etwa 20 - 40 Vol-% erreicht. Bei den größeren Metallpulvern mit einem mittleren Korndurchmesser von 2 - 20 µm wird die Fließgrenze beispielsweise bei 30 - 50 Vol-% erreicht.

Das ßießfähige Gemisch wird in ein Fällbad eingetragen, in dem das Polymerisat ausfällt oder koaguliert. Als Fällbad kann jedes geeignete Bad verwendet werden, in dem die verwendete Polymerisatdispersion ausfällt oder koaguliert. Vorzugsweise ist das Fällbad ein wäßriges Säurebad oder ein wäßriges Salzbad. Vorzugsweise wird 1 - 50 Gew.-%ige Ameisensäure als Säurefällbad verwendet.

Das Eintragen des fließfähigen Gemisches in das Fällbad kann auf vielfältige Weise erfolgen, die abhängt von der Form des gewünschten Fällungsproduktes. Beispielsweise kann das fließfähige Gemisch in Tropfenform in das Fällbad eingebracht werden. Dabei läßt man das fließfähige Gemisch derart aus einem Vorratsbehälter in ein leicht gerührtes Fällbad zulaufen, daß das Gemisch nach dem Auslauf aus dem Vorratsbehälter in einzelne Tropfen zerfällt und diese Tropfen im Fällbad Zu festen Tropfen ausgefällt werden. Dabei kann sich das aus dem Vorratsbehälter austretende Gemisch in Form eines Strahls ohne weiteres Zutun in Tropfen zerlegen. Man kann auch den Strahlzerfall in Tropfen steuern. Hierzu kann man dem aus einer Düse austretenden Strahl des fließfähigen Gemisches eine periodische Schwingung aufprägen, wodurch regelmäßige Einschnürungen gebildet werden. Bei geeigneter Kombination von Strahldurchmesser, Frequenz der Schwingung und Durchflußgeschwindigkeit wird die Amplitude der Einschnürung durch die Oberflächenkräfte dabei so verstärkt, daß der Strahl in einzelne Tropfen etwa gleichen Durchmessers zerfällt. Ein entsprechendes Verfahren ist beispielsweise detailliert in der DE-A-2 520 220 und der EP-A-0 274 098 beschrieben. Die Bestimmung geeigneter Parameter Zur Erzeugung von Tropfen kann durch geeignete Versuchsreihen erfolgen.

Das fließfähige Gemisch kann auch in Form von Strängen in das Fällbad eingetragen bzw. eingepreßt werden. Dabei können strangförmige Fällungsprodukte erhalten werden. Bei der Herstellung von Strängen enthält das Gemisch vorzugsweise 5 - 10 Vol-% mehr Pulver als bei der Herstellung von Tropfen.

Bei der Fällung oder Koagulation entstehen offenzellige poröse anorganische Fällungsprodukte. Sie enthalten vorzugsweise zusammenhängende Kanäle, die das Produkt ganz durchziehen.

Das nicht fließfähige Produkt enthält Polymerisat, anorganisches Pulver und Dispergiermittel. Vorzugsweise besteht es aus diesen Komponenten und dem verwendeten Medium, insbesondere Wasser. Nach dem Ausfällen oder Koagulieren wird das Produkt in Stufe b) aus dem Fällbad abgetrennt und getrocknet. Das Trocknen erfolgt dabei vorzugsweise für 1 - 2 Stunden im Luftstrom bei einer Temperatur von 100 bis 130°C.

In der nachfolgenden Stufe b) wird das Produkt Zur Entfernung von Polymerisat und Dispergiermittel erhitzt und gleichzeitig oder anschließend gesintert. Vorzugsweise werden die Produkte mit einer Geschwindigkeit von 2 - 5°C/min so weit aufgeheizt, daß sie noch nicht oder höchstens um 5 % durch Sintern schrumpfen. Bei keramischen Pulvern wird dabei vorzugsweise unter Luft gearbeitet. Die Temperaturen betragen hierbei vorzugsweise 700 - 1200°C. Aluminiumoxid und Siliciumcarbid werden beispielsweise auf Temperaturen von 800 - 1100 °C aufgeheizt. Metallpulver werden unter Inertgasatmosphäre, beispielsweise unter Stickstoff oder Argon, oder bevorzugt unter Wasserstoff oder Gasgemischen aus Wasserstoff und Stickstoff und/oder Argon auf Temperaturen von 500 - 1200°C aufgeheizt. Produkte aus Carbonyleisenpulver mit Pulverkorngrößen von 2 - 5 µm erreichen bereits bei 500°C hohe Festigkeiten. Man hält die Temperatur vorzugsweise für 1 - 4 Stunden bei der optimalen Verfestigungstemperatur und läßt dann abkühlen.

Die Erfindung betrifft auch die nach dem vorstehenden Verfahren erhältlichen bzw. erhaltenen porösen anorganischen Sinterprodukte. Diese porösen offenzelligen Sinterprodukte aus gesintertem anorganischem Pulver weisen vorzugsweise ein Porenvolumen von 50 - 95 %, vorzugsweise 50 - 80 % und eine Oberfläche von 0,1 - 50 m²/g, vorzugsweise 1 - 20 m²/g auf. Die Poren sind unregelmäßig. Vorzugsweise liegt eine mindestens bimodale Porengrößenverteilung mit Maxima im Bereich von 0,02 - 1 µm, besonders bevorzugt 0,05 - 0,5 µm und im Bereich von 20 - 500 µm, vorzugsweise 20 - 200 µm vor. Die porösen Produkte weisen vorzugsweise gesinterte Stege mit unregelmäßiger Länge mit Längenunterschieden von 1:1,5 bis 1:100, einem Verhältnis von Teilstegdurchmesser zu Teilchendurchmesser des Pulvers von 2 - 1000, vorzugsweise 5 - 500 auf. Die Produkte weisen dabei ein System von zusammenhängenden Kanälen auf, die die Produkte ganz durchziehen. Vorzugsweise weisen diese Kanäle, auch als Transportkanäle bezeichnet, die Weite von 20 - 500 µm auf.

Die erfindungsgemäßen Sinterprodukte können katalytisch aktive Stoffe oder deren Vorläufer enthalten. Diese Stoffe sind beispielsweise die vorstehend beschriebenen Metalle, insbesondere Edelmetalle, wie Platin, Palladium, Kobalt, Nickel, Silber, Eisen oder Kupfer. Diese katalytisch aktiven Stoffe oder ihre Vorläufer können in das fließfähige Gemisch eingebracht oder auf die Oberflächen der Sinterprodukte aufgebracht werden. Vorzugsweise enthalten die Sinterprodukte 0,1 - 5 Gew.-%, bezogen auf das Gesamtgewicht des Sinterproduktes an aufgebrachten katalytisch aktiven Stoffen oder deren Vorläufern.

Beispielsweise können diese Metalle als Oxidpulver in das fließfähige Gemisch eingebracht werden. Das Sintern kann dabei nach Trocknen und Pyrolysieren unter Wasserstoff in reduzierender Atmosphäre erfolgen. Dabei werden Sinterprodukte erhalten, die katalytisch aktive Metalle aufweisen. Die erfindungsgemäßen Sinterprodukte, die auch als Sinterschaumprodukte bezeichnet werden, können als Katalysatorträger oder Katalysatoren verwendet werden. Sie können außerdem beispielsweise als Kolonnenpackungen in Trennverfahren in der chemischen Industrie verwendet werden.

Die Erfindung wird nachstehend durch Beispiele zusätzlich erläutert.

### Beispiele 1 - 3

### Aluminiumoxid

Zunächst wurden die in der nachstehenden Tabelle angegebenen Mengen an Tetramethylammoniumoleat (TMAO) in Form einer 25 gew.-%igen wäßrigen Zubereitung als Dispergiermittel und die angegebene Menge vollentsalztes Wasser in einem Anmischbehälter vorgelegt und bei Raumtemperatur gemischt. Sodann wurde die angegebene Menge einer Acrylester-Dispersion (Acronal® S 360 D der BASF AG, Ludwigshafen) als Bindemittel zugemischt. Zuletzt wurde die angegebene Menge Aluminiumoxid (CT 3000 SG der Firma Alcoa, mittlere Komgröße etwa 0,9 µm) über einen Zeitraum von 15 Minuten eingerührt.

Das so erhaltene Gemisch wurde sodann bei Raumtemperatur über einen Auslauf mit einstellbarem Ventil ohne Anlegen einer zusätzlichen Schwingung bei Raumtemperatur in ein mäßig gerührtes Fällbad getropft, das zu 20 Gew.-% aus Ameisensäure und Zu 80 Gew.-% aus vollentsalztem Wasser bestand. Das Fällbad enthielt etwa 10 Liter der Fällösung in einem Kunststoffgefäß.

Nach dem Zertropfen des Gemisches wurde das Fällbad über ein weitmaschiges Kunststoffsieb von den erhaltenen verfestigten tropfenförmigen Produkten abgetrennt.

Diese Produkte bzw. das Granulat, das eine Größe von 3 - 6 mm aufwies, wurde zunächst für 2 Stunden bei Raumtemperatur belassen und sodann in einem Trockenschrank innerhalb von 2 Stunden auf 120°C unter Luft aufgeheizt und für 3 Stunden bei 120°C belassen. Danach ließ man den Trockenschrank abkühlen, entnahm das Granulat und überführte es in einen Sinterofen. Dort wurde es ebenfalls unter Luft mit 3°C/min von 120°C auf 800°C aufgeheizt, für 2 Stunden bei 800°C belassen, worauf der Sinterofen abgeschaltet wurde.

Das gesinterte Granulat war gegenüber dem getrockneten, ungesinterten Granulat in seinen linearen Dimensionen nicht geschrumpft. Es war mechanisch stabil und bestand aus offenen Poren mit Porenweiten von 0,07 bis 0,2 mm. Beim Eintauchen in eine gerührte Suspension aus schwarzem Kupferoxidpulver wurden die Granulate sofort homogen schwarz durchgefärbt, was zeigt, daß das Porensystem das Granulat gleichmäßig und zusammenhängend durchzieht.

| Zusammensetzung der eingesetzten fließfähigen Gemische | | | |
|---|---|---|---|
| Beispiel | 1 | 2 | 3 |
| Dispergator (ohne Wasseranteil) | | | |
| Menge [g] | 4 | 8 | 4 |
| Vol.-Anteil [%] | 0,9 | 1,5 | 0,9 |

| Wasser | | | |
|---|---|---|---|
| Menge [g] | 212 | 274 | 237 |
| Vol.-Anteil [%] | 49,8 | 52,7 | 52,3 |

| Al₂O₃-Pulver | | | |
|---|---|---|---|
| Menge [g] | 438 | 750 | 548 |
| Vol.-Anteil [%] | 25,8 | 36,2 | 30,2 |

| Binder (ohne Wasseranteil) | | | |
|---|---|---|---|
| Menge [g] | 100 | 50 | 75 |
| Vol.-Anteil [%] | 23,5 | 9,6 | 16,6 |

Die kalzimerten Produkte wurden hinsichtlich ihrer spezifischen Oberfläche und der Porengrößenverteilung untersucht. Bei den Produkten aus Beispielen 1 bis 3 betrug die spezifische Oberfläche 6,1 bis 6,4 m²/g. Es wurden bimodale Porengrößenverteilungen gefunden: keine Mikroporen, keine Poren < 0,07 µm, sondern mittelgroße Poren im Bereich um 0,2 µm in sehr schmaler Verteilung, d.h. keine Poren > 0,4 µm, sowie große offene Poren (Transportkanäle) im Bereich von 10 µm bis 200 µm.

### Beispiel 4

### Siliciumcarbid

Analog zu den Beispielen 1 bis 3 wurden in 63 g VE-Wasser 12 g einer 25 gew.-%igen wäßrigen Tetramethylammoniumoleat-Zubereitung gelöst und 100 g der 50 gew.-%igen Acrylesterdispersion eingetragen. Sodann wurden über einen Zeitraum von 20 min. 220 g Siliciumcarbid-Pulver des Typs Carbogran® UF 15 (von Lonza) mit einer mittleren Korngröße von etwa 0,6 µm emgerührt. Dieses Gemisch wurde sodann bei Raumtemperatur wie in Beispiel 1 beschrieben in das Fällbad getropft. Nach Abdekantieren der gefällten Produkte wurden diese bei 130°C für etwa 3 Stunden im Umlufttrockenschrank getrocknet und sodann in einem Pyrolyseofen unter Stickstoff mit 5°C/min. auf 1100°C aufgeheizt und für 2 Stunden bei 1100°C belassen. Das so erhaltene Granulat war mechanisch sehr stabil. Es wies eine spezifische Oberfläche von 15 m²/g und eine bimodale Porengrößenverteilung mit zwei Peaks bei 0,08 bis 0,3 µm und 20 bis 200 µm auf.

### Beispiel 5

### Steatit

Es wurde ein feuchter Filterkuchen eines fertigen Steatitversatzes eingesetzt. Die nachstehenden Angaben beziehen sich auf den Feststoffanteil des Steatits. Zu 55 g VE-Wasser und 12 g einer 25%igen wäßrigen Zubereitung von Tetramethylammoniumoleat wurden 100 g der 50%igen wäßrigen Acrylesterdispersion gegeben und in dieses Gemisch nach und nach innerhalb von 15 min 234 g Steatit dispergiert.

Das fließfähige Gemisch wurde wie in Beispiel 1 beschrieben zertropft, die Tropfen getrocknet und danach mit einer Geschwindigkeit von 2°C/min. auf 900°C aufgeheizt und 2 Stunden bei 900°C belassen. Das tropfenförmige Granulat wies eine spezifische Oberfläche von 9 m²/g auf. Es hatte eine bimodale Korngrößenverteilung mit engen Peaks bei 0,5 bis 5 µm und 100 bis 200 µm.

### Beispiel 6

### Eisen

In einer Mischung aus 32 g 25%igem wäßrigem Tetramethylammoniumoleat, 80 g VE-Wasser und 200 g einer 50gew.-%igen Acrylesterdispersion (Acronal® S 360 D der BASF AG) wurden bei Raumptemperatur 1300 g eines Eisenoxidpigments (Bayferrox® 222 FM der Bayer AG) mit einem mittleren Teilchendurchmesser von etwa 0,7 µm dispergiert. Das so erhaltene Gemisch wurde in eine 10%ige wäßrige Ameisensäurelösung getropft, wobei die Tropfen sofort verfestigt wurden. Das tropfenförmige Granulat wurde abdekantiert und für 5 Stunden bei 130°C in einem Umlufttrockenschrank getrocknet.

Sodann wurde es in einen Röhrenofen überführt und unter Wasserstoffdurchfluß mit einer Heizrate von 2°C/min. auf 480°C erhitzt, eine Stunde bei dieser Temperatur belassen und sodann abgekühlt. Es wurde ein poröses Eisengranulat mit einer BET-Oberfläche von 14 m²/g erhalten. Die Porengrößenverteilung wies zwei schmale Maxima bei 0,3 µm und 200 µm auf.

## Patentansprüche

1. Verfahren Zur Herstellung von offenzelligen, porösen, anorganischen Sinterprodukten durch
a) Eintragen eines fließfähigen Gemisches, enthaltend wäßrige Polymerisatdispersion, sinterfähiges anorganisches Pulver und Dispergiermittel, in ein Fällbad, in dem das Polymerisat ausfällt oder koaguliert, Zur Bildung eines nicht fließfähigen Produktes, das Polymerisat, anorganisches Pulver und Dispergiermittel enthält,
b) Abtrennen des Produktes aus dem Fällbad und Trocknen des Produktes
c) Erhitzen des Produktes zur Entfernung von Polymerisat und Dispergiermittel und Sintern des Produktes.

2. Verfahren nach Anspruch 1, wobei das Eintragen des Gemisches in Stufe a) in Tropfenform oder Strangform erfolgt.

3. Verfahren nach Anspruch 1 oder 2, wobei das sinterfähige, anorganische Pulver ausgewählt ist aus Metallpulvern, mineralischen Pulvern, Keramikpulvern, Metallcarbidpulvern, Metallnitridpulvern und deren Gemischen.

4. Verfahren nach einem der Ansprüche 1 bis 3, wobei das Fällbad ein wäßriges Säurebad oder Salzbad ist.

5. Verfahren nach einem der Ansprüche 1 bis 4, wobei das Dispergiermittel Ammoniak, ein Ammoniumsalz einer organischen oder anorganischen Säure oder ein Tetraalkylammoniumsalz einer Fettsäure ist.

6. Verfahren nach einem der Ansprüche 1 bis 5, wobei das Polymerisat in der Polymerisatdispersion auf Styrol/Butadien-Copolymerisaten oder C₁₋₆-Alkyl(meth)acrylaten basiert.

7. Verfahren nach einem der Ansprüche 1 bis 6, wobei katalytisch aktive Stoffe oder deren Vorläufer in das fließfähige Gemisch eingebracht oder auf die Oberflächen der Sinterprodukte aufgebracht werden.

8. Poröses offenzelliges Sinterprodukt, herstellbar nach einem Verfahren gemäß einem der Ansprüche 1 bis 7.

9. Poröses offenzelliges Sinterprodukt aus gesintertem anorganischem Pulver mit einem Porenvolumen von 50 bis 95 %, einer Oberfläche von 0,1 bis 50 m²/g und einer mindestens bimodalen Porengrößenverteilung mit Maxima im Bereich von 0,02 bis 5 µm und 20 bis 500 µm.

10. Sinterprodukt nach Anspruch 8 oder 9, auf das 0,1 bis 5 Gew.-%, bezogen auf das Gesamtgewicht des Sinterprodukts, katalytisch aktive Stoffe oder deren Vorläufer aufgebracht sind.

11. Verwendung eines porösen offenzelligen Sinterproduktes nach einem der Ansprüche 8 bis 10 als Katalysator oder Katalysatorträger.
